# FASCICULE DE BREVET EUROPEEN

(11) **EP 4 240 954 B1**
(45) Date de publication et mention de la délivrance du brevet: **07.01.2026**
(21) Numéro de dépôt: 21814830.2
(22) Date de dépôt: 03.11.2021
(51) Int. Cl.: F02K 1/04, F02K 1/80

(54) **FIXATION D'UN CÔNE D'ÉJECTION DANS UNE TUYÈRE DE TURBOMACHINE**
BEFESTIGUNG EINES ABGASKONUS IN EINER TURBOMASCHINENDÜSE
FASTENING OF AN EXHAUST CONE IN A TURBOMACHINE NOZZLE

(30) Priorité: 05.11.2020 FR 2011380
(43) Date de publication de la demande: 13.09.2023
(73) Titulaire: Safran Nacelles, 76700 Gonfreville-l'Orcher (FR)
(72) Inventeur: JORET, Jean-Philippe, 77550 MOISSY-CRAMAYEL (FR); DEVANLAY, Vincent, 77550 MOISSY-CRAMAYEL (FR); BRAVIN, Fabien, 77550 MOISSY-CRAMAYEL (FR); MERABET, Boualem, 77550 MOISSY-CRAMAYEL (FR)
(74) Mandataire: Ernest Gutmann - Yves Plasseraud S.A.S.
(86) Numéro de dépôt international: PCT/FR2021/051934
(87) Numéro de publication internationale: WO 2022/096820

(56) Documents cités:
- FR-A1- 3 084 916
- FR-A1- 3 084 917
- US-A1- 2016 161 121

## Description

### Domaine technique de l'invention

L'invention concerne les moyens de fixation d'un cône d'éjection dans une tuyère de turbomachine, en particulier les moyens de fixation d'un cône d'éjection en composite à matrice céramique.

### Etat de la technique antérieure

Le présent exposé concerne un ensemble situé à l'arrière (extrémité aval) d'un turboréacteur d'aéronef pour optimiser l'écoulement d'air primaire expulsés par le turboréacteur, et possiblement absorber au moins une partie du bruit engendré par l'interaction de ces gaz chauds, issus des parties internes moteur (chambre de combustion, turbine(s)), avec l'air ambiant et avec le flux d'air froid expulsé par la soufflante du turboréacteur.

Plus précisément, le présent exposé concerne la liaison entre ce qui est souvent dénommé cône d'éjection et, située juste à l'amont, une sortie de gaz du turboréacteur. Un exemple de cône d'éjection est décrit dans le document FR 3 084 916 A1.

Typiquement le cône d'éjection est complété (entouré) par une partie dite tuyère primaire. Le cône d'éjection est destiné à être positionné en aval de la partie turbine du turboréacteur, autour de laquelle la tuyère primaire est placée concentriquement. Le cône d'éjection et la tuyère primaire sont tous deux fixés sur un carter du turboréacteur par un système de fixation par des brides.

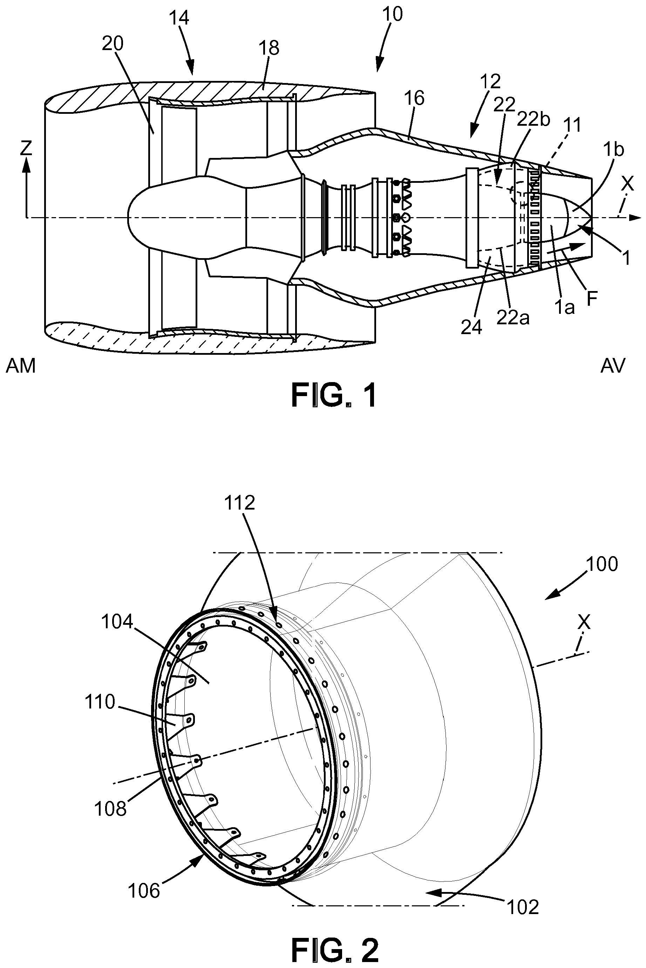

On connait un ensemble pour turboréacteur d'aéronef représenté sur la figure 1, comprenant :
- un élément central d'éjection de gaz, annulaire autour d'un axe longitudinal X et adapté pour que du gaz soit éjecté par le turboréacteur autour de lui, d'amont vers l'aval, et
- une bride de liaison interposée entre, à l'amont, une dite sortie métallique d'un turboréacteur et, à l'aval, l'élément central, pour les relier ensemble.

L'axe longitudinal X précité est l'axe longitudinal, ou axe de rotation, de la turbomachine, en particulier de la soufflante 20 et des aubes mobiles du moteur 12.

L'élément central d'éjection de gaz peut correspondre au cône d'éjection précité (repéré 1 ci-après), ou au moins à la partie amont 1a ci-après.

Un cône d'éjection classique 1 est représenté à la figure 1, sur laquelle l'amont (AM) et l'aval (AV) de la structure suivant un axe moteur (axe longitudinal X ci-avant) sont situés respectivement à gauche et à droite de la figure.

Plus généralement, un turboréacteur à gaz d'aéronef 10 est illustrée en figure 1, dont la partie centrale, formant le moteur 12 à turbine à gaz, est montée à l'intérieur d'un ensemble 14 de nacelle de moteur, comme cela est typique d'un aéronef conçu pour un fonctionnement subsonique, telle qu'un turbopropulseur ou un turboréacteur à double flux.

L'ensemble 14 de nacelle comprend généralement une nacelle de moteur 16 et une nacelle de soufflante 18 entourant une soufflante 20 située axialement en amont du moteur 12.

Le moteur 12 comprend, axialement en partie aval, au moins une turbine qui peut être une turbine basse pression et, encore en partie aval, un carter d'échappement 22 comprenant une virole annulaire interne 22a et une virole annulaire externe 22b délimitant entre elles une partie aval de la veine annulaire primaire 24 dans laquelle circule les gaz de combustion issus de la chambre de combustion du moteur 12.

La virole annulaire interne 22a est reliée, à son extrémité aval, au cône d'éjection 1, lequel peut comprendre une partie amont 1a, de forme sensiblement cylindrique, et une partie aval 1b de forme conique.

En pratique, il reste difficile de relier ensemble la sortie métallique précitée du turboréacteur, qui peut être ladite virole annulaire interne 22a, et ledit élément central, qui peut être ladite partie amont 1a du cône d'éjection 1. En, effet, au moins une partie du cône d'éjection est réalisée dans un matériau différent du carter d'échappement, ce qui induit des contraintes thermomécaniques, issues des gradients thermiques entre ladite partie du cône d'éjection et le carter d'échappement. De plus, un caisson annulaire peut être agencé à l'intérieur du cône d'éjection pour réduire les nuisances sonores des gaz de sortie. La liaison du caisson annulaire au carter d'échappement et/ou au cône d'éjection est aussi complexe du fait de la différence de matériau et donc des contraintes thermomécaniques engendrées.

### Résumé de l'invention

Le présent exposé propose d'utiliser un assemblage du cône d'éjection au carter d'échappement qui soit plus fiable et plus robuste aux gradients thermiques du fait même de sa liaison à l'une et l'autre des pièces précitées.

Pour cela, le présent exposé propose un ensemble pour turbomachine, plus particulièrement pour tuyère de turbomachine, d'axe longitudinal comprenant :
- un cône d'éjection comprenant une paroi annulaire externe d'écoulement d'un flux d'air primaire et un caisson annulaire, qui peut être un caisson annulaire, agencé radialement à l'intérieur de ladite paroi annulaire externe, le caisson annulaire comprenant une paroi annulaire interne agencée radialement à l'intérieur de la paroi annulaire externe du cône d'éjection,
- un carter d'échappement agencé en amont du cône d'éjection, et
- un organe de liaison flexible dans une direction radiale intercalé longitudinalement entre le carter d'échappement et le cône d'éjection, l'organe de liaison étant fixé au carter d'échappement et à la paroi annulaire interne, et
dans lequel la paroi annulaire interne est reliée à la paroi annulaire externe par des moyens de fixation configurés pour permettre des déplacements de la paroi annulaire interne dans une direction circonférentielle et une direction longitudinale par rapport à la paroi annulaire externe.

Ainsi, les moyens de fixation permettent des degrés de liberté circonférentiel et axial de la paroi annulaire interne et de la paroi annulaire externe, ce qui permet de réduire les contraintes thermomécaniques subit par la paroi annulaire interne et la paroi annulaire externe dues à la différence de matériau. De plus, les moyens de fixation permettent de maintenir ensemble la paroi annulaire externe et la paroi annulaire interne, et ainsi réduire le porte à faux de la paroi annulaire externe, et donc sa masse.

Dans le présent exposé, l'amont et l'aval sont définis par rapport à l'entrée et la sortie d'air de la turbomachine, l'amont correspondant à l'entrée d'air et l'aval à la sortie d'air. Par ailleurs, la direction axiale correspond à la direction de l'axe de révolution de la turbomachine, qui correspond à l'axe de rotation des pièces tournantes de la turbomachine, et la direction radiale est une direction perpendiculaire à l'axe de révolution.

Les moyens de fixation peuvent être montés avec un premier jeu dans la direction circonférentielle et un second jeu dans la direction longitudinale avec la paroi annulaire interne.

Les moyens de fixation peuvent être montés avec un premier jeu dans la direction circonférentielle et un second jeu dans la direction longitudinale avec la paroi annulaire externe.

Le premier jeu peut être égal ou différent du second jeu.

Au moins l'un desdits moyens de fixation peut comprendre une vis et un écrou. L'ensemble peut comprendre un jeu annulaire entre un orifice de la paroi annulaire interne ou un orifice de la paroi annulaire externe. Chaque moyen de fixation peut être comme précité.

Le jeu annulaire peut avoir une forme circulaire ou oblongue.

Ledit au moins un moyen de fixation peut comprendre une bague de serrage et une rondelle coupelle flexible radialement précontrainte entre la bague de serrage et la paroi annulaire interne.

La rondelle coupelle peut être dimensionnée pour tenir en position la paroi annulaire interne contre la paroi annulaire externe en prenant en compte les tolérances géométriques, les dilations thermiques et les déplacements en vol.

La rondelle coupelle peut se déformer radialement pour absorber les déformations radiales de la paroi annulaire interne dues aux contraintes thermomécaniques dans certains cas de vol.

Le jeu annulaire peut être dimensionné en fonction de la dilation thermique des pièces environnantes telles que la bague de serrage, la rondelle coupelle, etc.

La bague de serrage de chaque moyen de fixation peut être montée avec le jeu annulaire dans l'orifice de la paroi annulaire interne ou l'orifice de la paroi annulaire externe. Par exemple, le jeu annulaire peut être prévu entre la surface radialement externe de la bague de serrage et la surface radialement interne de l'orifice de la paroi annulaire interne ou de l'orifice de la paroi annulaire externe.

Chaque moyen de fixation peut comprendre en outre au moins une rondelle d'usure. L'ensemble peut comprendre une première rondelle d'usure agencée radialement entre la paroi annulaire interne et la paroi annulaire externe et une seconde rondelle d'usure agencée radialement entre la paroi annulaire interne et la rondelle coupelle. Ainsi, les usures dues au frottements de la paroi annulaire interne et la paroi annulaire externe sont réduites. L'organe de liaison peut comprendre une bride annulaire et une pluralité de pattes de fixation distribués circonférentiellement autour de l'axe longitudinale, la bride annulaire étant reliée au carter d'échappement et les pattes de fixation étant reliées à la paroi annulaire interne. Au moins un des moyens de fixation peut être agencé en regard d'un espace circonférentiel entre deux pattes de fixation successives.

Cet agencement permet de limiter l'encombrement radial des moyens de fixation.

Les pattes de fixation de l'organe de liaison peuvent être rigides ou flexibles. Les pattes de fixation flexibles permettent de reprendre la dilatation thermique entre le cône d'éjection et le carter d'échappement.

La paroi annulaire interne peut comprendre une partie amont intercalée radialement entre la paroi annulaire interne et l'organe de liaison, ladite partie amont de la paroi annulaire interne étant reliée à la paroi annulaire externe par les moyens de fixation.

Chaque patte de fixation peut être reliée à la paroi annulaire interne par un moyen de liaison, les moyens de fixation et les moyens de liaison forment chacun une rangée annulaire.

Un carénage annulaire, qui peut être formé de plusieurs secteurs angulaires, peut être relié à une partie amont de la paroi annulaire externe. Il peut entourer l'organe de liaison et former une continuité d'une virole du carter d'échappement de sorte à définir une surface annulaire interne d'écoulement d'une veine d'écoulement d'un flux d'air primaire. Le carénage peut être relié à une partie amont de la bride annulaire.

Une pluralité de supports sont distribués circonférentiellement autour de l'axe longitudinal et reliés à la paroi annulaire interne, le carénage étant fixé contre lesdits supports.

Un joint d'étanchéité annulaire peut être agencé longitudinalement entre la paroi annulaire externe et le carter d'échappement et configuré pour limiter les fuites du flux d'air primaire vers l'intérieur de la paroi annulaire interne.

Le caisson annulaire peut être un caisson annulaire acoustique. Le caisson annulaire acoustique permet de limiter les nuisances sonores dues à l'écoulement des gaz issus de la turbine. Le caisson annulaire peut comprendre une pluralité de cloisons acoustiques s'étendant radialement vers l'extérieur depuis la paroi annulaire interne du caisson. Les cloisons acoustiques peuvent être métalliques.

La paroi annulaire interne ou la paroi annulaire externe peuvent être en matériau composite ou métallique.

Le cône d'éjection peut comprendre une partie aval par exemple conique reliée à la paroi annulaire externe réalisée dans un matériau en composites à matrice céramique.

Le carter d'échappement peut être réalisé dans un matériau métallique.

Le présent exposé propose aussi une tuyère comprenant un ensemble tel que précité ainsi qu'une turbomachine comprenant une telle tuyère.

### Brève description des figures

[Fig. 1] la figure 1, déjà décrite, représente une coupe schématique de profil d'une turbomachine pour aéronef.
[Fig. 2] la figure 2 représente une vue en perspective d'une partie amont d'un ensemble selon une première forme de réalisation.
[Fig. 3] les figures 3a et 3b représentent des vues partielles de l'ensemble selon la première forme de réalisation.
[Fig. 4] les figures 4a et 4b représentent des vues en coupe d'un moyen de fixation équipant l'ensemble des figures 2 et 3.
[Fig. 5] la figure 5 représente une vue en coupe d'un moyen de fixation équipant l'ensemble des figures 2 et 3.
[Fig. 6] la figure 6 représente une vue partielle d'une variante de l'ensemble des figures 2 et 3.
[Fig. 7] les figures 7a et 7b représentent des vues partielles de l'ensemble selon une seconde forme de réalisation.

### Description détaillée de l'invention

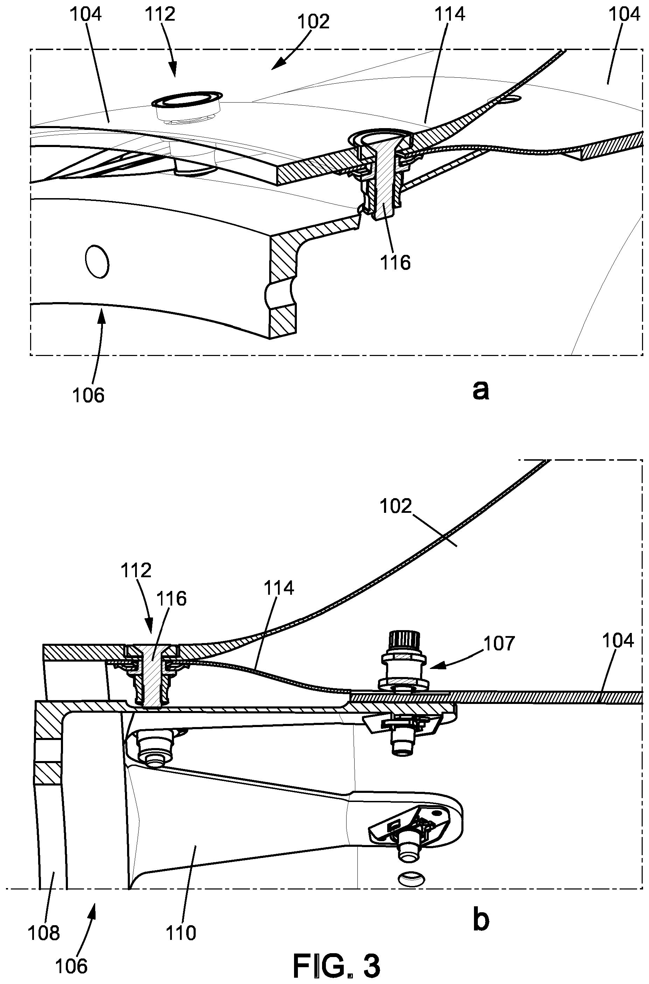

Les figures 2, 3 et 4 représentent une partie d'un ensemble pour turbomachine selon une première forme de réalisation de l'invention. Cet ensemble comporte un cône d'éjection 100 comprenant, du côté amont, une paroi annulaire externe 102 délimitant une veine d'écoulement d'un flux de gaz chauds et un caisson annulaire agencé radialement à l'intérieur de la paroi annulaire externe 102. Le caisson annulaire comprend une paroi annulaire interne 104 agencée radialement à l'intérieur de la paroi annulaire externe 102 et une pluralité de cloisons acoustiques agencées entre la paroi annulaire externe 102 et la paroi annulaire interne 104. Les parois annulaires interne et externe sont annulaires autour d'un axe longitudinal X. La description détaillée est réalisée en relation avec un caisson annulaire acoustique. Toutefois, la présente divulgation peut être appliquée à d'autres types de caissons annulaires non nécessairement acoustiques.

L'ensemble comporte en outre un carter d'échappement non représenté. La paroi annulaire interne 104 du cône d'éjection 100 est reliée audit carter d'échappement, par l'intermédiaire d'une bride de liaison 106. La paroi annulaire externe 102 forme une continuité de surface avec une partie du carter d'échappement, de sorte à définir la veine d'écoulement du flux d'air primaire.

La bride de liaison 106 comporte une partie annulaire amont 108 et des pattes de fixation 110 s'étendant axialement vers l'aval depuis la partie annulaire amont 108. Les pattes de fixation 110 sont régulièrement réparties sur la circonférence et sont écartées circonférentiellement les unes des autres. La partie annulaire amont 108 est reliée au carter d'échappement et les pattes de fixation 110 sont fixées à la paroi annulaire interne 104 du cône d'éjection 100, par boulonnage des organes de fixation 107. Les pattes de fixation 110 peuvent être flexibles ou rigides. La bride de liaison 106 peut être métallique.

La partie aval de la paroi annulaire externe 102 est en outre reliée à la partie aval de la paroi annulaire interne 104.

La partie amont de la paroi annulaire externe 102 est aussi reliée à la partie amont 114 de la paroi annulaire interne 104 par des moyens de fixation 112. La partie amont 114 de la paroi annulaire interne 104 est formé par une paroi annulaire s'étendant radialement vers l'extérieur pour rejoindre la paroi annulaire externe 102. La partie amont 114 peut être une paroi annulaire rapportée sur la paroi annulaire interne 104 et fixée à cette dernière par vissage, en particulier par vissage directement aux pattes de fixation 110. La partie amont 114 peut être formée d'un seul tenant avec la paroi annulaire interne 104.

Le cône d'éjection 100 comprend une partie aval conique réalisée dans un matériau composite à matrice céramique.

La paroi annulaire externe 102 et la paroi annulaire interne 104 peuvent être réalisées en matériau composite à matrice céramique ou bien en matériau métallique.

En fonctionnement, l'ensemble est soumis à de hautes températures qui induisent des contraintes thermomécaniques importantes au niveau des parois annulaires externe et interne. Pour réduire l'effet des contraintes thermomécaniques, les moyens de fixation 112 sont montés avec un jeu annulaire 118 dans la partie amont 114 de la paroi annulaire interne 104.

Les moyens de fixation 112 comprennent une pluralité de vis 116 régulièrement réparties sur la circonférence et sont écartées circonférentiellement les unes des autres. Les vis 116 sont montées avec le jeu annulaire 118 dans des orifices correspondant de la partie amont 114 de la paroi annulaire interne 104. Les vis 116 s'étendent radialement vers l'intérieur.

Le jeu annulaire 118 permet les déplacements circonférentiels et axiaux de la paroi annulaire interne 104 par rapport à la paroi annulaire externe 102. Cet agencement permet donc les dilatations thermiques de la paroi annulaire interne dans la direction circonférentielle et la direction axiale.

Les moyens de fixation 112 peuvent être montés avec le jeu annulaire 118 dans un orifice de montage correspondant de la paroi annulaire externe 102.

Chaque vis 116 peut être agencée en regard d'une patte de fixation 110 ou de la partie annulaire amont 108 de la bride de liaison 106. Chaque vis peut former ainsi une butée radiale des parois annulaires externe et interne, ce qui limite les débattements radiaux des parois annulaires dues aux contraintes thermomécaniques.

Chaque vis 116 peut être agencée en regard d'un espace circonférentiel entre deux pattes de fixation 110 successives. Cet agencement permet de réduire l'encombrement radial de l'ensemble.

Chaque moyen de fixation 112 comprend en outre un écrou 120 et une bague de serrage 122 intercalée radialement entre l'écrou 120 et la paroi annulaire externe 102. La bague de serrage 122 est montée avec le jeu annulaire 118 par rapport à la partie amont 114 de la paroi annulaire interne 104.

Chaque moyen de fixation 112 comprend en outre une rondelle coupelle 124 formée par une partie annulaire et une pluralité de languettes espacées circonférentiellement autour de la partie annulaire de la rondelle coupelle 124. Les languettes peuvent se déformer dans la direction radiale lorsqu'elles sont soumises à des contraintes supérieures à un seuil de tolérance, de sorte à soulager la structure de l'ensemble en cas de dommages en fonctionnement de l'ensemble par exemple en cas de perte d'une aube de la turbine.

Le jeu annulaire 118 peut être dimensionnée en fonction de la dilation thermique des pièces environnantes telles que l'écrou 120, la bague de serrage 122, la vis 116, etc.

Chaque vis 116 présente une tête conique 115 agencée dans un logement 126 prévu dans la surface radialement extérieure de la paroi annulaire externe 102. Ainsi, les moyens de fixation 112 n'impactent pas l'écoulement de flux d'air primaire et donc le profil aérodynamique de la paroi annulaire externe 102.

Chaque moyen de fixation 112 comprend en outre une bague fraisée 128 présentant une forme complémentaire à la forme de la tête conique 115 et recevant la tête conique 115 de la vis 116. La bague fraisée 128 permet de limiter les frottements entre la vis 116 et la paroi annulaire externe 102. Cela permet aussi de réduire le risque de rupture de la paroi annulaire externe 102 lors du serrage de la vis 115. En effet, si la fraisure de la vis 115 venait se serrer directement sur la paroi annulaire externe 102, elle induirait trop d'effort dans la paroi annulaire externe 102. La bague 128 métallique permet de venir serrer au couple la jonction, et la bague 128 s'appuie sur un plan sur la paroi annulaire externe 102

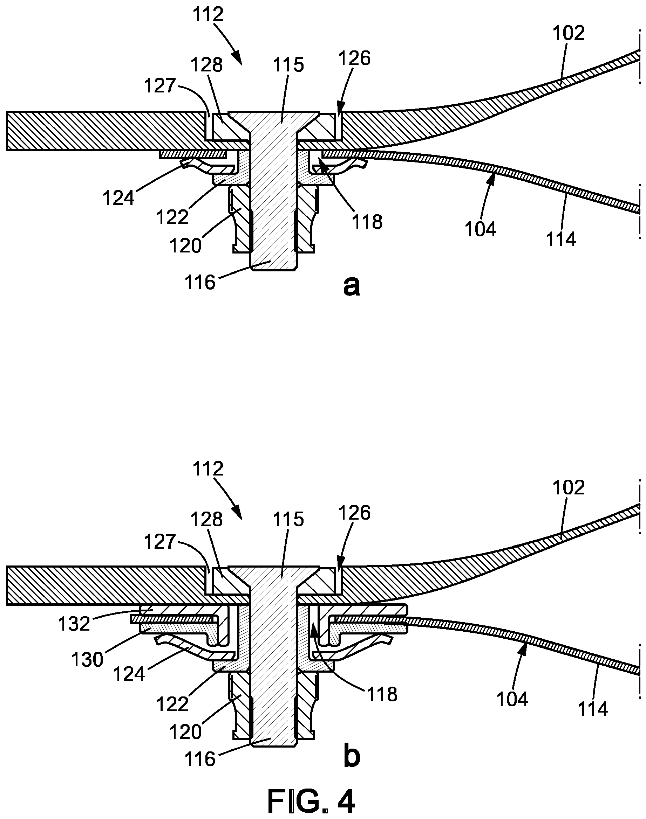

Dans la variante représentée à la figure 4b, chaque moyen de fixation 112 comprend une première rondelle d'usure 130 agencée entre la rondelle coupelle 124 et la paroi annulaire interne 104.

Chaque moyen de fixation 112 comprend une seconde rondelle d'usure 132 agencée entre la paroi annulaire externe 102 et la paroi annulaire interne 104.

La première rondelle d'usure 130 et la seconde rondelle d'usure 132 permettent de limiter les usures des pièces du moyen de fixation 112 et des parois annulaires interne et externe.

Le jeu annulaire 118 peut être circulaire ou oblong.

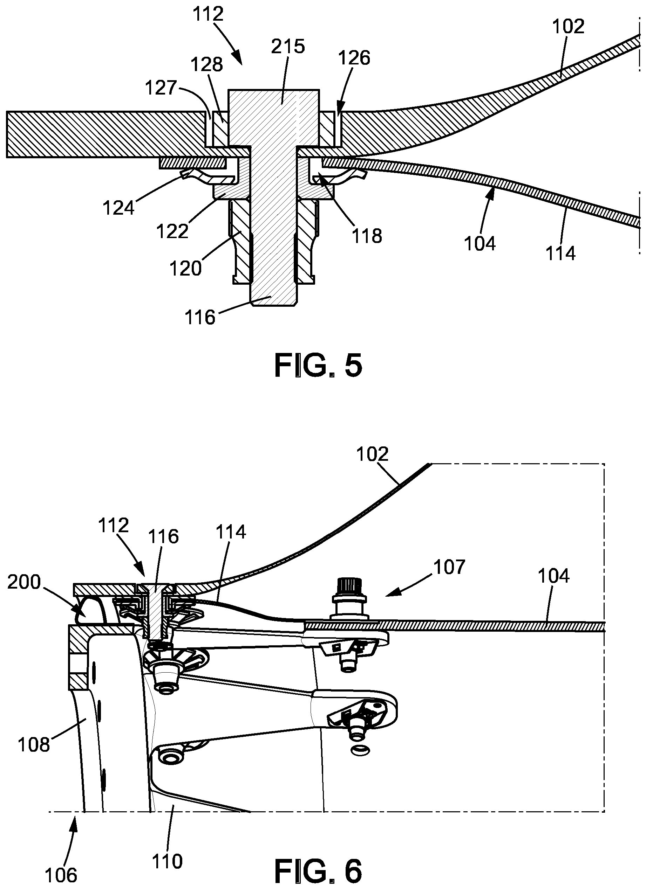

Dans la variante de la figure 5, chaque vis 116 présente une tête protubérante 215 qui dépasse radialement vers l'extérieur du logement 126. Les têtes protubérantes 215 pourraient aussi ne pas être entourées de bague 128. La tête 215 pourrait aussi être formée totalement en saillie radialement à l'extérieur de la paroi annulaire externe 102 et il pourrait ne pas y avoir de jeu annulaire 127, la tête étant appliquée radialement vers l'intérieur de la paroi annulaire externe 102.

Dans la variante de la figure 6, l'ensemble comprend un joint d'étanchéité 200 annulaire agencé radialement entre la bride de liaison 106 et la paroi annulaire externe 102 de sorte à obturer l'espace annulaire radial entre la bride de liaison 106 et la paroi annulaire externe 102. Le joint d'étanchéité 200 comprend une partie cylindrique agencée autour de la bride de liaison 106 et une paroi annulaire s'étendant vers la paroi annulaire externe 102. Le joint d'étanchéité 200 comprend en outre un rebord annulaire s'étendant axialement et agencé en contact avec la surface interne de la paroi annulaire externe 102.

Le joint d'étanchéité 200 peut être formé par une pluralité de secteurs angulaires reliés entre eux ou être formé d'une seule pièce, par exemple sous la forme d'un joint annulaire fendu.

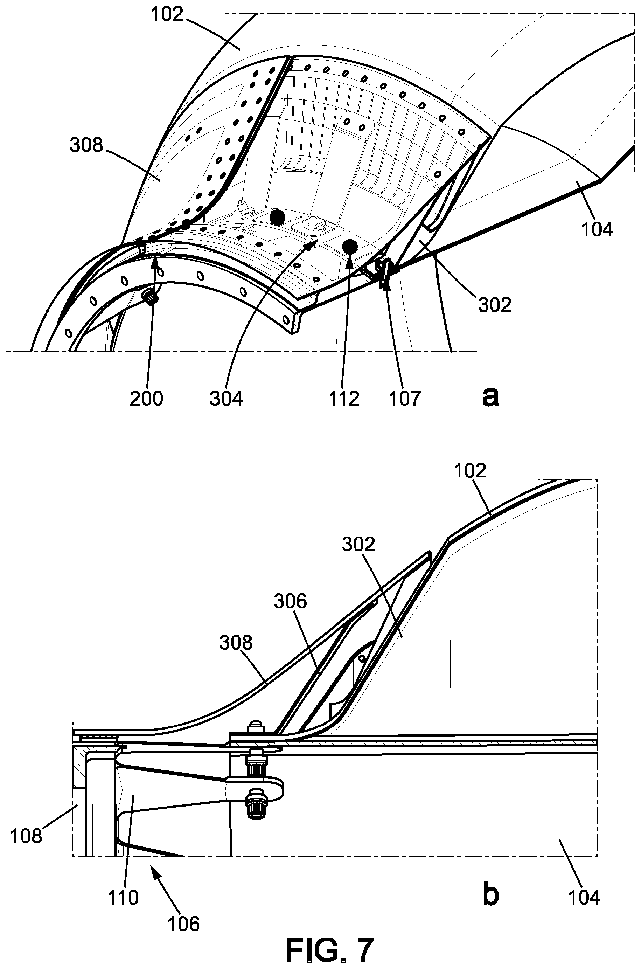

La figure 7 représente une partie d'un ensemble pour turbomachine selon une seconde forme de réalisation de l'invention. Cet ensemble comporte les mêmes éléments que l'ensemble de la figure 6. A la différence, la paroi annulaire externe 102 présente une partie amont 302 s'étendant radialement vers la paroi annulaire interne 104. La partie amont 302 de la paroi annulaire externe 102 est reliée à la paroi annulaire interne 102 par les moyens de fixation 112.

Les moyens de fixation 112 sont montés avec le jeu annulaire 118 dans l'orifice correspondant de la paroi annulaire externe 102.

La partie amont 302 de la paroi annulaire 102 comprend une pluralité d'évidements 304 s'étendant radialement et espacés circonférentiellement. Les organes de fixation 107 de la paroi annulaire interne 104 à la bride de liaison 106 sont aménagés dans les évidements 304.

Les moyens de fixation 112 et les organes de fixation 107 sont chacun agencés sur une rangée annulaire autour de la paroi annulaire interne 104. La rangée annulaire des moyens de fixation 112 et la rangée annulaire des organes de fixation 107 peuvent être décalées axialement l'une de l'autre. Elles pourraient encore être agencées à une même position axiale. Dans l'un et l'autre cas, les moyens de fixation 112 sont disposés en alternance circonférentiellement avec les organes de fixation 107.

L'ensemble comprend en outre une pluralité de supports 306 réparties circonférentiellement autour de la paroi annulaire interne 104. Les pattes 306 sont fixées à la paroi annulaire interne 104, en particulier à la bride de liaison 106. Les supports 306 s'étendent radialement vers l'extérieur depuis la paroi annulaire 104.

L'ensemble comprend en outre un carénage 308 annulaire agencé autour de la bride de liaison 106 et formant une continuité d'une partie du carter d'échappement de sorte à définir la veine d'écoulement d'un flux d'air primaire.

Le carénage annulaire 308 est relié à une partie amont de la paroi annulaire externe 102. Le carénage annulaire 308 est fixé à la bride annulaire 108 au moyens d'équerre 200. Un joint annulaire peut être intercalé radialement entre le carénage annulaire 308 et la bride annulaire 108.

Dans les différentes réalisations, une jeu annulaire 127 existe entre la bague et le pourtour du logement 126 de la paroi annulaire externe 102, ce qui autorise des dilatations thermiques de la bague 128 et des déplacements axiaux de la paroi annulaire externe 102. Pour des raisons de représentations, ce jeu annulaire 127 n'est illustré que sur les figures 4 et 5.

## Revendications

1. Ensemble pour tuyère de turbomachine d'axe longitudinal (X) comprenant :
- un cône d'éjection (100) comprenant une paroi annulaire externe (102) d'écoulement d'un flux d'air primaire et un caisson annulaire agencé radialement à l'intérieur de ladite paroi annulaire externe (102), le caisson annulaire comprenant une paroi annulaire interne (104) agencée radialement à l'intérieur de la paroi annulaire externe du cône d'éjection,
- un carter d'échappement agencé en amont du cône d'éjection, et
- un organe de liaison (106) flexible dans une direction radiale, intercalé longitudinalement entre le carter d'échappement et le cône d'éjection (100), l'ensemble étant **caractérisé en ce que**
l'organe de liaison est fixé au carter d'échappement et à la paroi annulaire interne (104), et
**en ce que** la paroi annulaire interne (104) est reliée à la paroi annulaire externe (102) par des moyens de fixation (112) configurés pour permettre des déplacements de la paroi annulaire interne (104) dans une direction circonférentielle et une direction longitudinale par rapport à la paroi annulaire externe (102).

2. Ensemble selon la revendication 1, dans lequel les moyens de fixation (112) sont montés avec un premier jeu dans la direction circonférentielle et un second jeu dans la direction longitudinale avec la paroi annulaire interne ou la paroi annulaire externe.

3. Ensemble selon la revendication 1 ou 2, dans lequel au moins l'un desdits moyens de fixation 112) comprend une vis et un écrou, ledit ensemble comprenant un jeu annulaire (118) entre un orifice de la paroi annulaire interne (104) ou un orifice de la paroi annulaire externe (102).

4. Ensemble selon la revendication 3, dans lequel ledit au moins un moyen de fixation (112) comprend une bague de serrage (122) et une rondelle coupelle (124) flexible radialement précontrainte entre la bague de serrage (122) et la paroi annulaire interne (104).

5. Ensemble selon la revendication 4, dans lequel la bague de serrage (122) de chaque moyen de fixation est montée avec le jeu annulaire (118) dans l'orifice de la paroi annulaire interne (104) ou l'orifice de la paroi annulaire externe (102).

6. Ensemble selon l'une des revendications 1 à 5, dans lequel chaque moyen de fixation (122) comprend en outre au moins une rondelle d'usure (130,132).

7. Ensemble selon l'une des revendications 1 à 6, dans lequel l'organe de liaison (106) comprend une bride annulaire (108) et une pluralité de pattes de fixation (110) distribuées circonférentiellement autour de l'axe longitudinale (X), la bride annulaire (106) étant reliée au carter d'échappement et les pattes de fixation étant reliées à la paroi annulaire interne, et dans lequel au moins un des moyens de fixation (112) est agencé en regard d'un espace circonférentiel entre deux pattes de fixation successives.

8. Ensemble selon l'une des revendications 1 à 7, dans lequel la paroi annulaire interne (104) comprend une partie amont intercalée radialement entre la paroi annulaire interne (104) et l'organe de liaison (106), ladite partie amont (114) de la paroi annulaire interne étant reliée à la paroi annulaire externe (102) par les moyens de fixation (112).

9. Ensemble selon la revendication 7, dans lequel chaque patte de fixation (110) est reliée à la paroi annulaire interne (104) par un moyen de liaison (107), les moyens de fixation (112) et les moyens de liaison (107) forment chacun une rangée annulaire.

10. Ensemble selon l'une des revendications 1 à 9, comprenant un carénage (308) relié à une partie amont de la paroi annulaire externe (102) et entourant l'organe de liaison (106) et formant une continuité d'une virole du carter d'échappement de sorte à définir une surface annulaire interne d'écoulement d'une veine d'écoulement d'un flux d'air primaire.

11. Ensemble selon la revendication 10, comprenant une pluralité de supports (306) distribués circonférentiellement autour de l'axe longitudinal (X) et reliés à la paroi annulaire interne (104), le carénage (308) étant fixé contre lesdits supports (306).

12. Ensemble selon l'une des revendications 1 à 11, comprenant un joint d'étanchéité (200) annulaire agencé longitudinalement entre la paroi annulaire externe (102) et le carter d'échappement et configuré pour limiter les fuites du flux d'air primaire vers l'intérieur de la paroi annulaire interne (104).

13. Tuyère comprenant un ensemble selon l'une des revendications 1 à 12.

## Patentansprüche

1. Anordnung für eine Turbomaschinen- bzw. Turbotriebwerksdüse mit Längsachse (X), umfassend:
- einen Ausstoßkonus (100) mit einer äußeren Ringwand (102) für den Durchfluss eines Primärluftstroms und einem ringförmigen Kasten, der radial innerhalb der äußeren Ringwand (102) angeordnet ist, wobei der ringförmige Kasten eine innere Ringwand (104) umfasst, die radial innerhalb der äußeren Ringwand des Ausstoßkonus angeordnet ist,
- ein Auslassgehäuse, das dem Ausstoßkonus vorgelagert ist, und
- ein in radialer Richtung flexibles Verbindungselement (106), das in Längsrichtung zwischen dem Auslassgehäuse und dem Ausstoßkonus (100) angeordnet ist,
wobei die Anordnung **dadurch gekennzeichnet ist, dass** das Verbindungselement an das Auslassgehäuse und an die innere Ringwand (104) befestigt ist, und dass die innere Ringwand (104) mit der äußeren Ringwand (102) durch Befestigungsmittel (112) verbunden ist, die so ausgelegt sind, dass sie Bewegungen der inneren Ringwand (104) in Umfangsrichtung und in Längsrichtung relativ zur äußeren Ringwand (102) ermöglichen.

2. Anordnung nach Anspruch 1,
wobei die Befestigungsmittel (112) mit einem ersten Spiel in Umfangsrichtung und einem zweiten Spiel in Längsrichtung mit der inneren Ringwand oder der äußeren Ringwand zusammengesetzt sind.

3. Anordnung nach Anspruch 1 oder 2,
wobei zumindest eines der Befestigungsmittel (112) eine Schraube und eine Mutter umfasst, wobei die Anordnung einen ringförmigen Spalt (118) zwischen einer Öffnung in der inneren Ringwand (104) und einer Öffnung in der äußeren Ringwand (102) aufweist.

4. Anordnung nach Anspruch 3,
wobei das zumindest eine Befestigungsmittel (112) einen Klemmring (122) und eine radial flexible Unterlegscheibe (124) umfasst, die zwischen dem Klemmring (122) und der inneren Ringwand (104) vorgespannt ist.

5. Anordnung nach Anspruch 4,
wobei der Klemmring (122) jedes Befestigungsmittels mit dem ringförmigen Spalt (118) in der Öffnung der inneren Ringwand (104) oder der Öffnung der äußeren Ringwand (102) angebracht ist.

6. Anordnung nach einem der Ansprüche 1 bis 5,
wobei jedes Befestigungsmittel (122) ferner zumindest eine Verschleißscheibe (130, 132) umfasst.

7. Anordnung nach einem der Ansprüche 1 bis 6,
wobei das Verbindungselement (106) einen ringförmigen Flansch (108) und eine Vielzahl von Befestigungslaschen (110) umfasst, die in Umfangsrichtung um die Längsachse (X) verteilt angeordnet sind, wobei der ringförmige Flansch (106) mit dem Auslassgehäuse verbunden ist und die Befestigungslaschen mit der inneren Ringwand verbunden sind, und wobei zumindest eines der Befestigungsmittel (112) einem Umfangsraum gegenüberliegend zwischen zwei aufeinanderfolgenden Befestigungslaschen angeordnet ist.

8. Anordnung nach einem der Ansprüche 1 bis 7,
wobei die innere Ringwand (104) einen vorderen Abschnitt umfasst, der radial zwischen der inneren Ringwand (104) und dem Verbindungselement (106) eingefügt ist, wobei der vordere Abschnitt (114) der inneren Ringwand durch die Befestigungsmittel (112) mit der äußeren Ringwand (102) verbunden ist.

9. Anordnung nach Anspruch 7,
wobei jede Befestigungslasche (110) über ein Verbindungsmittel (107) mit der inneren Ringwand (104) verbunden ist, wobei die Befestigungsmittel (112) und die Verbindungsmittel (107) jeweils eine ringförmige Reihe bilden.

10. Anordnung nach einem der Ansprüche 1 bis 9,
umfassend eine Verkleidung (308), die mit einem vorderen Abschnitt der äußeren Ringwand (102) verbunden ist und das Verbindungselement (106) umgibt und eine Fortsetzung eines Mantelrings des Auslassgehäuses bildet, um eine innere ringförmige Strömungsfläche eines Strömungskanals für einen Primärluftstrom zu definieren.

11. Anordnung nach Anspruch 10,
umfassend eine Vielzahl von Halterungen (306), die in Umfangsrichtung um die Längsachse (X) verteilt angeordnet und mit der inneren Ringwand (104) verbunden sind, wobei die Verkleidung (308) an den Halterungen (306) befestigt ist.

12. Anordnung nach einem der Ansprüche 1 bis 11,
umfassend eine ringförmige Dichtung (200), die in Längsrichtung zwischen der äußeren Ringwand (102) und dem Auslassgehäuse angeordnet und dazu ausgelegt ist, das Austreten des Primärluftstroms in das Innere der inneren Ringwand (104) zu begrenzen.

13. Düse, umfassend eine Anordnung nach einem der Ansprüche 1 bis 12.

## Claims

1. An assembly for a nozzle of a turbomachine with a longitudinal axis (X) comprising:
- an exhaust cone (100) comprising an outer annular wall (102) for the flow of a primary airflow and an annular box arranged radially inside said outer annular wall (102), the annular box comprising an inner annular wall (104) arranged radially inside the outer annular wall of the exhaust cone,
- an exhaust case arranged upstream of the exhaust cone, and
- a connecting member (106) flexible in a radial direction, interposed longitudinally between the exhaust case and the exhaust cone (100), the assembly being **characterized in that** the connecting member is fastened to the exhaust case and to the inner annular wall (104), and **in that**
the inner annular wall (104) is connected to the outer annular wall (102) by fastening means (112) configured to enable movements of the inner annular wall (104) in a circumferential direction and a longitudinal direction with respect to the outer annular wall (102).

2. The assembly according to claim 1, wherein the fastening means (112) are mounted with a first clearance in the circumferential direction and a second clearance in the longitudinal direction with the inner annular wall or the outer annular wall.

3. The assembly according to claim 1 or 2, wherein at least one of said fastening means (112) comprises a screw and a nut, said assembly comprising an annular clearance (118) between an orifice of the inner annular wall (104) or an orifice of the outer annular wall (102).

4. The assembly according to claim 3, wherein said at least one fastening means (112) comprises a clamping ring (122) and a flexible cup washer (124) radially prestressed between the clamping ring (122) and the inner annular wall (104).

5. The assembly according to claim 4, wherein the clamping ring (122) of each fastening means is mounted with the annular clearance (118) in the orifice of the inner annular wall (104) or the orifice of the outer annular wall (102).

6. The assembly according to one of claims 1 to 5, wherein each fastening means (122) further comprises at least one wear washer (130, 132).

7. The assembly according to one of claims 1 to 6, wherein the connecting member (106) comprises an annular flange (108) and a plurality of fastening lugs (110) distributed circumferentially around the longitudinal axis (X), the annular flange (106) being connected to the exhaust case and the fastening lugs being connected to the inner annular wall, and wherein at least one of the fastening means (112) is arranged opposite a circumferential space between two successive fastening lugs.

8. The assembly according to one of claims 1 to 7, wherein the inner annular wall (104) comprises an upstream portion radially interposed between the inner annular wall (104) and the connecting member (106), said upstream portion (114) of the inner annular wall being connected to the outer annular wall (102) by the fastening means (112).

9. The assembly according to claim 7, wherein each fastening lug (110) is connected to the inner annular wall (104) by a connecting means (107), each of the fastening means (112) and the connecting means (107) form an annular row.

10. The assembly according to one of claims 1 to 9, comprising a fairing (308) connected to an upstream portion of the outer annular wall (102) and surrounding the connecting member (106) and forming a continuity of a shroud of the exhaust case so as to define an inner annular flow surface of a flow path of a primary airflow.

11. The assembly according to claim 10, comprising a plurality of supports (306) distributed circumferentially around the longitudinal axis (X) and connected to the inner annular wall (104), the fairing (308) being fastened against said supports (306).

12. The assembly according to one of claims 1 to 11, comprising an annular seal (200) arranged longitudinally between the outer annular wall (102) and the exhaust case and configured to limit leaks of the primary airflow towards the inside of the inner annular wall (104).

13. A nozzle comprising an assembly according to one of claims 1 to 12.
